# EUROPEAN PATENT APPLICATION

(11) **EP 4 371 911 A1**
(43) Date of publication of application: **22.05.2024**
(21) Application number: 22383100.9
(22) Date of filing: 15.11.2022
(51) Int. Cl.: B65G 15/12, B65G 47/244, B65G 21/12, B65G 41/00

(54) **A CONVEYOR DEVICE AND A METHOD FOR THE CONTROLLED AND STABLE MOVEMENT AND ROTATION OF CYLINDRICAL CONTAINERS ON A CONVEYOR DEVICE**

(71) Applicant: Alta Vision, SRL, 50720 Cartuja Baja (ES)
(72) Inventor: TESSORE, Eduardo Héctor, 22300 Barbastro (ES)
(74) Representative: Torner, Juncosa I Associats, SL

(57) **Abstract**

A conveyor device and a method for the controlled and stable movement and rotation of cylindrical containers on a conveyor device are proposed. The conveyor device comprises a first conveyor chain (10A) and a second conveyor chain (10B), which are disposed spaced from and parallel to each other and which are configured to move one or more cylindrical containers (1) therebetween in a transport direction; and a control unit to operate at least one of said first conveyor chain (10A) and said second conveyor chain (10B). The first conveyor chain (10A) and the second conveyor chain (10B) are configured to be disposed with an inclination with respect to each other and to be moved at different speeds, such that the one or more cylindrical containers (1) can be rotated along their vertical axis in a stable and controlled manner while moving along the first and second conveyor chains (10A, 10B).

## Description

### Technical Field

The present invention generally relates to conveying devices. More in particular, the present invention relates to a conveyor device and to a method for the controlled and stable movement and rotation of cylindrical containers, such as bottles, etc. on a conveyor device.

### Background of the Invention

In conveyor devices for conveying containers of different types such as, for example, bottles, etc. to be filled or for further preparation thereof, the containers must be able to rotate at the same time they are moved at high speed (approximately 80 meters/minute) along the conveyor chains. The rotation of the containers should be stable and predictable otherwise the containers could fall onto the conveyor chains.

Although different types of conveyor devices for transport and orientation of bottles and other containers are known in the art, none of such know solutions allows a controlled and stable movement and rotation of the containers. Thus, there is a need for a new conveyor device, and method, for enabling a precise control of the rotation of the containers while they are moved at high speed on the conveyor device.

### Description of the Invention

To that end, embodiments of the present invention provide, according to a first aspect, a conveyor device that comprises a first conveyor chain, a second conveyor chain, and a control unit for operating at least one of the cited conveyor chains. The first conveyor chain and the second conveyor chain are disposed spaced from and parallel to each other and are configured to move one or more cylindrical containers (e.g. bottles, cans, etc.) therebetween in a transport direction. Moreover, the first conveyor chain and the second conveyor chain are configured to be disposed with an inclination with respect to each other and to be moved at different speeds.

The present invention also provides, according to a second aspect, a method for the controlled and stable movement and rotation of cylindrical containers on a conveyor device, the conveyor device comprising the device of the first aspect of the invention. The proposed method comprises, disposing, by the control unit, the first conveyor chain and the second conveyor chain with an inclination with respect to each other; and moving, by the control unit, the first conveyor chain and the second conveyor chain at different speeds.

The specific configuration of the chains (i.e. inclination and speed asynchrony/difference) enables that the one or more cylindrical containers can be rotated along their vertical axis in a stable and controlled manner while moving along the first and second conveyor chains at high speed.

In some embodiments, either the first conveyor chain or the second conveyor chain is adjustable to different angles of inclination.

In some embodiments, the second conveyor chain is disposed inclined with respect to the first conveyor chain, or vice versa (i.e. the first conveyor chain is inclined with respect to the second conveyor chain). In some embodiments, the angle of inclination is equal or less than 5 degrees. In some other embodiments, the angle of inclination is comprised between 0.5-5 degrees. In a particular embodiment, the angle of inclination is about 2 degrees.

In some embodiments, the conveyor device further includes an arrangement of magnets arranged under the conveyor chain that is disposed inclined with respect to the other, the arrangement of magnets comprising a plurality of magnets extending in the transport direction of the inclined conveyor chain.

In some embodiments, the conveyor device also includes a pulse encoder attached to the first conveyor chain and/or to the second conveyor chain for obtaining accurate location position of the conveyor device.

According to the invention, the one or more cylindrical containers can be made of glass, plastic, metal, wood, cork, among others.

### Brief Description of the Drawings

The previous and other advantages and features will be more fully understood from the following detailed description of embodiments, with reference to the attached figures, which must be considered in an illustrative and non-limiting manner, in which:

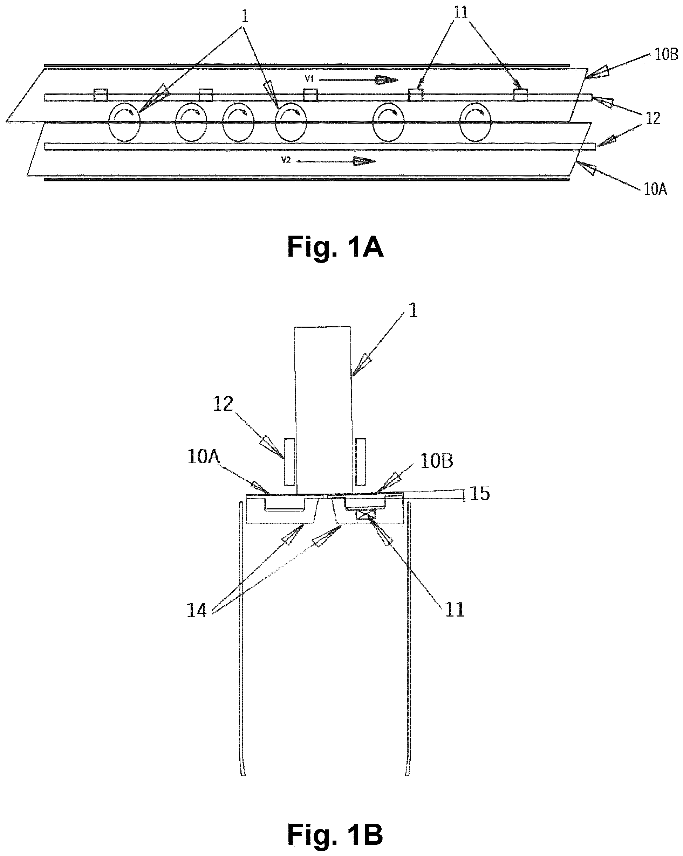

Fig. 1A schematically illustrates a top view of the proposed conveyor device, according to an embodiment. Fig. 1B schematically illustrates a cross-section view of the proposed conveyor device.

### Detailed Description of the Invention and of Preferred Embodiments

An example of the proposed conveyor device is shown in Figs. 1A and 1B. According to this embodiment, the conveyor device comprises a doble-conveyor chain on which a plurality of containers 1, particularly bottles, are transported. The conveyor device also includes at least one control device/element (not illustrated for simplicity of the figures) to operate the doble-conveyor chain.

As can be seen in the figures, the two conveyor chains 10A, 10B of the doble-conveyor chain are inclined relative to one another. More in particular, the conveyor chain 10B is disposed with a given angle of inclination 15.

The angle of inclination 15 can be adjusted by the control device/element, and is particularly comprised between 0.5 and 5 degrees. In some other embodiments the angle is between 0.5 and 2 degrees. In a particular embodiment, such angle of inclination 15 is approximately 2 degrees.

The two conveyor chains 10A, 10B are likewise moved at different speeds. Particularly, the speed at which the conveyor chain 10B (i.e. the inclined conveyor chain) is moved is higher than the speed at which the conveyor chain 10A is moved. In any case, it should be noted that the difference in speed of the two conveyor chains 10A, 10B will mainly depend on the diameter of the container 1 and on the angle at which it is to be rotated.

According to this embodiment, an arrangement of magnets 11 is also placed under the conveyor chain 10B. This arrangement of (equidistant or variable-spaced) magnets 11 enables that the angle of inclination 15 is kept stable. Likewise, it also prevents the conveyor chain 10B from separating from the chain guides 14. The figure also illustrates the lateral guides 12 that enable the containers 1 to be maintained centered between the two conveyor chains 10A, 10B.

The proposed conveyor device, although not shown in the figures, in some embodiments can also include a pulse encoder operatively connected to the control device/element. The pulse encoder can be attached to the conveyor chain 10B or to both chains 10A, 10B. Hence, thanks to the control achieved in the rotation of the containers 1, and using the pulse encoder, it is possible to obtain the precise location of the conveyor chain 10B, with errors in the position of the containers 1 of less than 3%.

The scope of the present invention is defined in the appended claims.

## Claims

1. A conveyor device, comprising:
a first conveyor chain (10A) and a second conveyor chain (10B), which are disposed spaced from and parallel to each other and which are configured to move one or more cylindrical containers (1) therebetween in a transport direction; and
a control unit configured to operate at least one of said first conveyor chain (10A) and said second conveyor chain (10B);
**characterized in that:**
the first conveyor chain (10A) and the second conveyor chain (10B) are configured to be disposed with an inclination with respect to each other; and
the first conveyor chain (10A) and the second conveyor chain (10B) are configured to be moved at different speeds,
such that the one or more cylindrical containers (1) can be rotated along their vertical axis in a stable and controlled manner while moving along the first and second conveyor chains (10A, 10B).

2. The conveyor device of claim 1, wherein either the first conveyor chain (10A) or the second conveyor chain (10B) is adjustable to different angles of inclination (15).

3. The conveyor device of any one of the previous claims, wherein the second conveyor chain (10B) is disposed inclined with respect to the first conveyor chain (10A), or vice versa, an angle of inclination (15) being comprised between 0.5 and 5 degrees.

4. The conveyor device of claim 3, wherein the angle of inclination (15) is about 2 degrees.

5. The conveyor device of any one of the previous claims, further comprising an arrangement of magnets (11) arranged under the conveyor chain that is disposed inclined with respect to the other, the arrangement of magnets (11) comprising a plurality of magnets extending in the transport direction of the inclined conveyor chain.

6. The conveyor device of any one of the previous claims, further comprising a pulse encoder attached to the first conveyor chain (10A) and/or the second conveyor chain (10B), the pulse encoder being configured to obtain location position of the conveyor device.

7. The conveyor device of any one of the previous claims, wherein the one or more cylindrical containers (1) are made of glass, plastic, metal, wood or cork.

8. A method for the controlled and stable movement and rotation of cylindrical containers on a conveyor device, the conveyor device comprising a first conveyor chain (10A) and a second conveyor chain (10B), which are disposed spaced from and parallel to each other and which are configured to move one or more cylindrical containers (1) therebetween in a transport direction, and a control unit for operating at least one of the first conveyor chain (10A) and the second conveyor chain (10B), the method comprising:
disposing, by the control unit, the first conveyor chain (10A) and the second conveyor chain (10B) with an inclination with respect to each other; and
moving, by the control unit, the first conveyor chain (10A) and the second conveyor chain (10B) at different speeds,
such that the one or more cylindrical containers (1) can be rotated along their vertical axis in a stable and controlled manner while moving along the first and second conveyor chains (10A, 10B).

9. The method of claim 8, wherein either the first conveyor chain (10A) or the second conveyor chain (10B) is adjustable to different angles of inclination (15).

10. The method of claim 8 or 9, comprising disposing the second conveyor chain (10B) inclined with respect to the first conveyor chain (10B), or vice versa, with an angle of inclination (15) being comprised between 0.5 and 5 degrees.

11. The method of claim 10, wherein the angle of inclination (15) is about 2 degrees.

12. The method of any of previous claims 8 to 11, further comprising placing an arrangement of magnets under the conveyor chain that is disposed inclined with respect to the other, the arrangement of magnets comprising a plurality of magnets extending in the transport direction of the inclined conveyor chain.

13. The method of any of previous claims 8 to 12, further comprising attaching a pulse encoder to the first conveyor chain (10A) and/or to the second conveyor chain (10B) for obtaining location position of the conveyor device.
